# EUROPEAN PATENT SPECIFICATION

(11) **EP 1 831 587 B1**
(45) Date of publication and mention of the grant of the patent: **13.06.2012**
(21) Application number: 04808802.5
(22) Date of filing: 20.12.2004
(51) Int. Cl.: F16G 5/16

(54) **DRIVE BELT FOR A CONTINUOSLY VARIABLE TRANSMISSION**
TREIBRIEMEN FÜR EIN STUFENLOSES GETRIEBE
COURROIE D'ENTRAINEMENT POUR UNE TRANSMISSION VARIABLE EN CONTINU

(43) Date of publication of application: 12.09.2007
(73) Proprietor: ROBERT BOSCH GMBH, 70442 Stuttgart (DE)
(72) Inventor: FAES, Paulus, Adrianus, Josephus, Maria, NL-5045 ZH Tilburg (NL)
(74) Representative: Plevier, Gabriel Anton Johan Maria
(86) International application number: PCT/NL2004/000886
(87) International publication number: WO 2006/068458

(56) References cited:
- EP-A- 0 367 620
- EP-A- 1 069 341
- EP-A- 1 158 204
- WO-A-03/069185
- WO-A-2004/111490

## Description

The invention is related to a drive belt according to the preamble of claim 1. Such a drive belt is generally known, more in particular from the European patent application no. 0.994.275, and is often referred to as the Van Doorne push belt. The known drive belt comprises at least one endless tensile means and a multitude of plate-like transverse elements placed one after the other on the tensile means forming a more or less continuous string. The elements are supported and guided by the tensile means, but at the same time they are freely moveable along its circumference. Such a drive belt is most commonly used in continuously variable transmissions or CVTs for motor vehicles, where it is wrapped around and in frictional contact with two pulleys for transmitting torque there between at a continuously variable transmission ratio, which transmission is also generally known, for example from WO-A-2003/021134.

The mechanical efficiency of such a transmission is determined by a multitude of factors that are often mutually interacting, whereby improving the transmission efficiency normally is related to finding the optimum value for one or a particular combination of such factors. One such factor is discussed in the above-mentioned international patent application and relates to the amount of deformation of the pulleys expressed as an axial stiffness of the discs thereof. This publication discloses that during operation of the transmission the part of the trajectory of the drive belt between the pulley discs spirals radially inward in the direction of movement, due to the pulley discs bending axially apart. According to WO-A-2003/021134, such a spiral tracking of the drive belt with respect to the pulley discs has a detrimental effect on the transmission efficiency, which effect may be mitigated by increasing the stiffness of, in particular, the pulley construction. However, a maximum attainable stiffness is of course finite, also in view of a proper functioning of the transmission.

The present invention is related to and aims for further improving the transmission efficiency, however, in a previously undisclosed manner, which departs from a newly observed feature of the functional behaviour of the transmission, in particular of the interaction between the pulley discs and the drive belt thereof. According to the invention such aim can, rather surprisingly, be realised by applying the drive belt in accordance with claim 1 in an otherwise known transmission.

Underlying the present invention is the observation that together with the spiral tracking of the drive belt also an angular or tangential velocity of the individual transverse elements changes along the length of the said trajectory part of the drive belt between the pulley discs, which trajectory part is denoted the 'wrapped arc' hereafter. Since, naturally, the angular velocity of the pulley discs is constant along their circumference, most of the transverse elements in the wrapped arc are slipping relative to the pulley discs, i.e. a difference in tangential velocity exists there between. It has been observed that under certain conditions, which in fact typically occur during operation of the transmission, the tangential velocity of the transverse elements is only equal to that of the pulley discs for a single or only a few of those elements in the wrapped arc. The other transverse elements in the wrapped arc either trail behind the rotational movement of the pulley, whereby a driving friction force is exerted by the pulley discs on such trailing elements, or lead in front of such movement of the pulley, whereby a driving friction force is exerted by such leading elements on the pulley discs.

One can imagine that, on the one hand, for the primary or drive pulley of the transmission, which is attached to and rotationally driven by an engine of the motor vehicle and which transfers a power generated by the engine to the drive belt by means of friction, the presence of such leading elements is counterproductive, because it has a detrimental effect on the maximum engine torque that can be transmitted by the transmission. On the other hand, the presence of the trailing elements at the secondary or driven pulley of the transmission, which is attached to and rotationally drives the driven wheels of the motor vehicle and which receives the engine power via the drive belt by means of friction, reduces the overall mechanical efficiency of the transmission.

Although the above-described phenomenon will typically occur at least to some extend, the detrimental effects thereof may be mitigated in accordance with the present invention. By applying the presently claimed measure the coefficient of friction prevailing in the lubricated frictional contact between the transverse elements of the drive belt and discs of the pulleys is made dependent on the direction of the slipping movement of the transverse elements relative to the pulley discs, i.e. either trailing behind or leading in front of the rotation of the pulley.

According to the invention, the -width and depth- dimensions of the front and rear transition surfaces or, more in particular, rounding or chamfer may be individually adapted to influence the amount of lubrication fluid that is supplied to the said frictional contact during operation of the transmission in dependency on the said direction of tangential movement of the elements relative to the pulley discs. Thus the coefficient of friction prevailing in that contact may be influenced and optimised separately for both such directions of tangential movement, since either the front transition surfaces or the rear transition surfaces will be the leading transition surfaces in dependency thereon.

For example, in theory it may be expected that the larger -such dimensions of-the respectively leading transition surfaces are, the lower the said coefficient of friction will become. Accordingly, when applying larger front transition surfaces as compared to the rear transition surfaces, the power transfer between the driving pulley and the drive belt would be enhanced. When the primary interest would be to improve the overall mechanical efficiency of the transmission, larger transition surfaces relative the front transition surfaces could be applied.

It is remarked that measurements have indicated that it is in particular the power transfer between the drive belt and the driven pulley that may be influenced by applying the measure according to the invention. Accordingly, the invention in particular relates to a drive belt wherein the dimensions of the rear transition surfaces are of a larger magnitude than those of the front transition surfaces. In such a drive belt, the detrimental effect on the power transfer at the driving pulley that would be expected in accordance with the present invention, proved to be relatively limited, in particular when compared with the more substantial increase in efficiency of the power transfer at the driven pulley.

It is further remarked that when the transition surface is rounded, i.e. forms a more or less smoothly curved transition between a side face and the front or rear main face, the dimension or magnitude thereof may according to the invention also be conveniently quantified by the radius of curvature of a virtual arc that at least effectively describes the rounded contour of such transition surface. For the usually applied drive belts, which are provided with transverse elements that typically are either 24 mm or 30 mm wide and have a thickness in the range from 1.4 to 2.0 mm, the said radius of curvature typically has a value in the range from 0.3 to 0.5 mm in absolute terms. Hereby, even a relatively small difference, e.g. of 25% between the radius of curvature of the front and rear transition surfaces may yield a notional favourable effect on the efficiency of the power transfer. Still, the favourable effect of the invention may be increasingly realised by applying a relatively large ratio of 2 or more between the above-mentioned radii of curvature.

The invention will now be illustrated further with reference to the accompanying figures.
Figure 1 is a schematic representation in a perspective view of a known continuously variable transmission provided with a drive belt and two pulleys.
Figure 2 provides a front elevation of a transverse element of the known drive belt.
Figure 3 is a cross section of the known transverse element along a plane A-A indicated in figure 2.
Figure 4 shows a simplified side elevation of the known continuously variable transmission according to figure 1, providing a schematic indication of the drive belt's trajectory in the transmission.
Figure 5 is a cross section corresponding to that of figure 2, however of a first embodiment of a transverse element designed in accordance with the invention.
Figure 6 is a cross section corresponding to that of figure 2, however of a second embodiment of a transverse element designed in accordance with the invention.

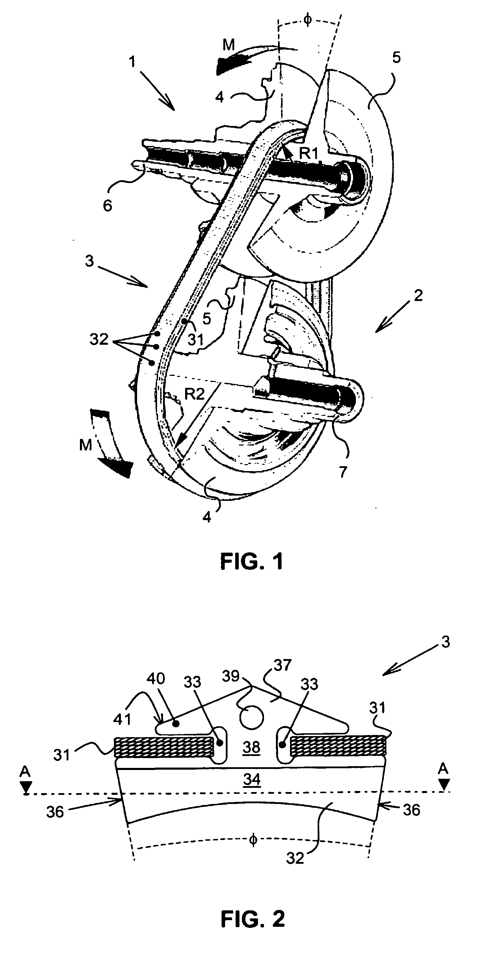

Figure 1 shows the central parts of a known continuously variable transmission that is commonly applied in the drive-line of motor vehicles between the engine and the drive wheels thereof. The transmission comprises two pulleys 1, 2, each provided with two pulley discs 4, 5, between which a push-type drive belt 3 is present for transmitting a rotational movement M and an accompanying torque from one pulley 1, 2 to the other 2, 1. The pulley discs 4, 5 are shaped generally conical and at least one pulley disc 4 is incorporated in the transmission axially moveable along a respective pulley shaft 6, 7 on which both discs 4, 5 are placed. The transmission normally also comprises activation means that impose on the said at least one movable disc 4 an axially oriented clamping force directed towards the respective other pulley disc 5 such that the drive belt 3 is clamped there between.

The drive belt 3 comprises an endless tensile means 31 and a multitude of relatively thin transverse elements 32 that are provided on the tensile means 31 movable along the longitudinal direction thereof and oriented predominantly transversely thereto. The elements 32 take-up the said clamping force, such that at rotation of a driving pulley 1, friction between the discs 4, 5 and the drive belt 3, causes the elements 32 to be thrust in the said direction of movement M from the said driving pulley 1 to a driven pulley 2 and back again, thereby being guided and supported by the tensile means 31. A geometric transmission ratio of the transmission is thereby determined and defined by the quotient of an effective contact radius R2 of the drive belt 3 at the driven pulley 2 and an effective contact radius R1 of the drive belt 3 at the driving pulley 1. Such radii R1, R2 and geometric transmission ratio may vary continuously in a pre-defined range of attainable values.

Figure 2 provides a front elevation of the known transverse element 32 that is incorporated in the drive belt 3 mounted on the endless tensile means 31 thereof, which, in this example, is shown to consist of two laminated parts, each part being formed by a number of thin and flat rings that are nested one around the other in the radial direction and being accommodated in a respective opening 33 of the transverse element 32.

The transverse element 32 comprises a body part 34, which is situated below or - relative to the radial direction- inside the tensile means 31 and which forms a bottom side of the openings 33. A generally arrowhead-shaped head part 37 of the transverse element 32 forms a topside of the openings 33. Situated between the openings 33 is a so-called pillar part 38 of the transverse element 32 that connects the body part 34 and the head part 37 to each other. On either lateral side thereof, the body part 34 is provided with side faces 36 for arriving into a frictional contact with the pulley discs 4, 5. These side faces 36 are mutually diverging in radially outward direction, whereby an angle φ of such divergence, the so-called belt angle φ, is also defined between the discs 4, 5 of the pulleys 1, 2 (see figure 1). It is common practice to provide the side faces 36 with a surface profiling to enhance the tribological properties of the frictional contact with the pulley discs 4, 5.

A projection 39 is provided on a front main face 40 of the transverse element 32 located essentially centrally on the head part 37 thereof, which projection 39 is accommodated in a hole (not visible) provided in a rear main face 41 of an adjacent transverse element 32. The projection 39 and hole are provided to mutually connect and align adjacent transverse elements 32 in the drive belt 3.

It is noted that the terms front and rear are defined in relation to the overall direction of movement M of the drive belt 3, whereas the terms leading and trailing, which are used hereinafter, are defined in relation to the direction of a relative movement of the transverse elements 32 with respect to the pulley discs 4, 5, at least a tangential component thereof.

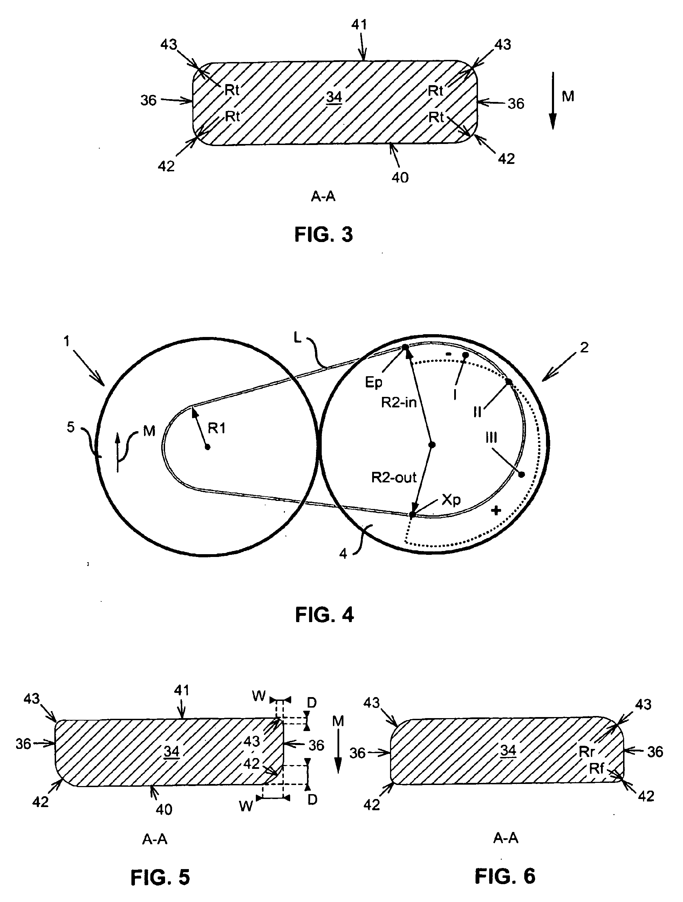

In figure 3 a cross section of the transverse element 32 is provided along the plane A-A in figure 2, i.e. at the location of its body part 34. It is shown here that the element 32 is provided with first or front transition surfaces 42 that form a transition between each of its two side faces 36 and its front main face 40 and with second of rear transition surfaces 43 that form a transition between each of the two side faces 36 of the element 32 and its rear main face 40. In this example, all of the transition surfaces 42 and 43 are smoothly rounded at a radius of curvature Rt that results from the usual manufacturing process of the transverse elements 32, in particular from the manufacturing step of stone tumbling the elements 32 to abrasively remove any burrs that were created during the blanking thereof from base material.

In figure 4 a side elevation of the transmission of figure 1 is provided, wherein the trajectory of the drive belt 3 is schematically indicated the by the solid line L. It is shown that between the discs 4, 5 of the driven pulley 2 the drive belt 3 follows a trajectory part that spirals radially inward from an entry point Ep of the belt 3 between the said discs 4, 5 to an exit point Xp thereof, as seen in the direction of movement M of the belt 3. This trajectory part being denoted the wrapped arc Ep-Xp hereafter.

Such spiral tracking of the drive belt 3 is a/o the result of an elastic deformation of the discs 4, 5, which bend axially outward during operation of transmission under the influence of the said clamping force. In practice such spiral tracking is hardly noticeable and has therefore been indicated in figure 2 to an exaggerated extend. However, even on the exaggerated scale of figure 2, the radially inward movement of the drive belt 3 is only significant at a relatively large contact radius R, such as R2 in figure 4, and will normally not be noticeable at a relatively small contact radius R, such as R1 in figure 4, where the discs 4, 5 are much more resistant to the said deformation. Other parameters that influence the extend of such radial inward movement are the axial stiffness of the pulley discs 4, 5 and that of the drive belt 3, in particular the transverse elements 32 thereof, as well as the belt angle φ and the level of the clamping force in relation to the torque level that is to be transmitted by the transmission.

In this respect it is noted that during normal operation of the transmission the clamping force that is actually applied on the drive belt 3 is higher than a minimum force level, which would be required for transmitting an instantaneously prevailing torque level. To the end, the actually applied clamping force is usually calculated by determining the said minimum force level in relation to said torque level and multiplying it by a so-called safety factor that is larger than 1, e.g. 1.3. Hereby, it is ensured that inaccuracies and/or sudden changes in the transmission torque can be safely accommodated by the transmission. However, this safety feature in the operation of the transmission comes with the consequence that not all the transverse elements 32 in the wrapped arc Ep-Xp (have to) contribute to transmitting the transmission torque. In fact, in a conventional analysis of the transmission operation, the wrapped arc Ep-Xp is considered to be divided into two sections, being a first or inactive section, where no tangentially oriented friction force and, inevitably, no difference in angular, i.e. tangential velocity is present between the individual transverse elements 32 and the pulley discs 4, 5, and a second or active section where indeed a difference in tangential velocity exists, due to an elastic compression of the elements 32 in the tangential direction. Consequently, the elements 32 exert a tangential friction force on the pulley discs 4, 5 in the direction of movement M.

According to the present invention, however, such conventional approach must be reconsidered in view of the phenomenon of spiral tracking, which implies that all but one of the transverse elements 32 in the wrapped arc Xp-Ep are slipping relative to the pulley discs 4, 5, which, inevitably, also results in a friction force being exerted between each such slipping element 32 and the pulley discs 4, 5. Under these circumstances, to reach an equilibrium of forces in the transmission, the wrapped arc Ep-Xp will be divided into three sections I, II, III, which is illustrated in figure 4 in relation to the driven pulley 2.

In a first or counter-active section I of the wrapped arc Ep-Xp, the transverse elements 32 trail behind the rotational movement of the driven pulley 2 and the tangential friction force exerted by the elements 32 on the respective pulley discs 4, 5 is thus oriented against the direction of movement M. Hence the minus ("-") sign in figure 2, wherein the dotted line represents the tangential velocity of the elements 32 relative to the solid line representing the local tangential velocity of the pulley discs 4, 5, which is of course determined by the overall angular velocity of the pulley 2 and the local contact radius R2). In other words, in this counter-active section I, the driven pulley 2 actually drives the drive belt 3.

In a second section of the wrapped arc Ep-Xp, which may comprise only one transverse element 32 and which is accordingly denoted timing point II hereafter, the transverse elements 32 exactly match the rotational movement of the pulley 2 and no friction force is exerted in the tangential direction at all. Finally, in a third or active section III of the wrapped arc Ep-Xp, the transverse elements 32 lead in front of the rotational movement of the driven pulley 2 and the tangential friction force exerted by the elements 32 on the respective pulley discs 4, 5 is thus oriented along the direction of movement M, hence the plus ("+") sign in figure 2. In other words, in this active section III the drive belt 3 effectively drives the driven pulley 2.

It may be readily inferred from the above that the presence of the trailing transverse elements 32 in the counter-active section I of the wrapped arc Ep-Xp at the driven pulley has a detrimental effect on the torque that can be exerted by the drive belt 3 on the driven pulley 2, as well as on the efficiency of the power transfer associated therewith. To the contrary, on the driving pulley the presence of leading transverse elements 32 has similar detrimental effects.

Based on the insights and analysis presented above, the present invention proposes to reduce such detrimental effects for either the driving pulley 1 or the driven pulley 2 by influencing the coefficient of friction between the transverse elements 32 of the drive belt 3 and the pulley discs 4, 5 in dependency on the direction of a relative tangential movement there between. More in particular, such coefficient of friction may be lowered for leading transverse elements 32, respectively raised for trailing transverse elements 32, so as to improve the torque transmission at the driving pulley 1, or, alternatively, such coefficient of friction may be lowered for trailing transverse elements 32, respectively raised for leading transverse elements 32, so as to improve the torque transmission at the driven pulley 2.

In this respect it is noted that typically the effect of influencing the coefficient of friction at the driven pulley 2 (whether positive or negative) is predominant over the effect at the driving pulley 1. Thus, the invention in particular relates to the lowering the coefficient of friction for trailing transverse elements 32, respectively raising the coefficient of friction for leading transverse elements 32, which may be conveniently realised by modifying the design of the transverse elements 32, which is discussed hereafter along the description of figures 5 and 6.

In figure 5 a cross section similar to that of figure 3 is provided, however, in this instance of a first embodiment of the transverse element 32 according to the present invention. In this first embodiment, the front transition surfaces 42 between the front main face 40 and the side faces 36 of the element 32 are provided with larger width W and depth D dimensions as compared to those of the rear transition surfaces 43 between the rear main face 41 and the side faces 36 of the element 32. These width W and depth D dimensions influence the amount of lubrication fluid that is forced into the frictional contact between the element 32 and the pulley discs 4, 5 during operation of the transmission. In theory, the larger these dimensions W, D of the respectively leading transition surfaces 42, 43, i.e. defined in relation to the direction of relative tangential movement between the element 32 and the pulley discs 4, 5, the lower the coefficient of friction in the said frictional contact will be. Thus, in this first embodiment of the element 32 according to the invention, the said leading elements 32 will experience a lower coefficient of friction than the said trailing elements 32 and, consequently, the power transfer between the driving pulley 1 and the drive belt 3 is enhanced. Hereby, also a lower clamping force can be allowed in relation to the torque level that is to be transmitted by the transmission, whereby the overall transmission efficiency would be improved.

In figure 6 a cross section similar to that of figures 3 and 5 is provided, however, in this instance of a second embodiment of the transverse element 32 according to the present invention. In this second embodiment, the front transition surfaces 42 are provided with smaller dimensions, here expressed in terms of a radius of curvature of the smoothly rounded front transition surface Rf, as compared to those of the rear transition surface 43 expressed in terms of a radius of curvature of the smoothly rounded rear transition surface Rr. Thus, in this second embodiment of the element 32 according to the invention, the said leading elements 32 will experience a higher coefficient of friction than the said trailing elements 32 and, consequently, the power transfer between the driven pulley 2 and the drive belt 3 is enhanced.

It is remarked that width W and depth D dimensions of the transition surfaces 42, 43, or the respective radius of curvature Rf, Rr thereof, may be set in the manufacturing process of the transverse elements 32 by means of, for example, grinding or plastic deformation (see e.g. EP-A-1 461 542). It may, however, also be possible to utilise a difference in the rounding between the front and rear transition surfaces 42 and 43 that naturally occurs as a result of the known blanking process for forming the elements 32 by performing the subsequent stone tumbling process only to a relatively limited extend.

In conclusion, it is remarked that the present invention is all about individually adapting the dimensions of the front and rear transition surfaces to influence the frictional contact between the transverse elements 32 of the belt 3 and the pulley discs 4, 5 during operation of the transmission in dependency on the said direction of tangential movement of the elements relative to the pulley discs 4, 5. It is the merit of the invention that it has been recognised that such dimensions and in particular any difference thereof between the front and rear transition surfaces provide a new design parameter, i.e. tool for optimising or enhancing the operation of the belt-and-pulley-type CVT. It is, however, not practical to prescribe particular (optimum) values for such dimensions, as these would depend on the particular result that is intended to be achieved therewith. Also, the lubrication properties of the said frictional contact (such as for example the amount of fluid present, the viscosity thereof, the type of surface profiling of the side faces, etc.) will have a considerable influence on the optimum dimensions to be applied for the respective transition surfaces.

## Claims

1. Drive belt (3) provided with an endless tensile means (31) and a multitude of relatively thin transverse elements (32) that are slideably mounted on the tensile means (31) oriented predominantly transversely thereto, that are formed in a blanking process followed by a process step for removing burrs formed in the blanking process, that have a front main face (40), which faces in a direction of movement of the element (32) when the belt (3) is in operation, and an oppositely facing rear main face (41) mutually separated over a thickness of the element (32) and predominantly facing in the longitudinal direction of the drive belt (3) and that have two side faces (36) one provided on each lateral side of the element (32) for arriving into a frictional contact with a pulley (1, 2) of a transmission in which the drive belt (3) is to be applied, whereby between each side face (36) and the said front main face (40) a respective front transition surface (42) is provided and whereby between each side face (36) and the rear main face (41) a respective rear transition surface (43) is provided, which transition surfaces (42, 43) have a notional width dimension (W) as measured in the axial direction of the drive belt (3) and a notional depth dimension (D) as measured in the longitudinal direction of the drive belt (3), **characterised in that**, either one or both of the width dimension (W) and the depth dimension (D) of the front transition surfaces (42) and the corresponding dimension or dimensions (W, D) of the rear transition surfaces (43) are mutually different.

2. Drive belt (3) according to claim 1, **characterised in that**, the front and rear transition surfaces (42, 43) are curved and **in that** a front radius of curvature (Rf), which at least effectively defines the curvature of the front transition surfaces (42), and a rear radius of curvature (Rr), which at least effectively defines the curvature of the rear transition surfaces (43), are mutually different.

3. Drive belt (3) according to the preceding claim, **characterised in that**, a ratio between the front radius of curvature (Rf) and a rear radius of curvature (Rr) amounts to at least 1.25 and preferably is larger than 2.

4. Drive belt (3) according to claim 1, 2 or 3, **characterised in that**, either one or both of the width dimension (W) and the depth dimension (D) of the rear transition surfaces (43) is larger than the corresponding dimension or dimensions (W, D) of the front transition surfaces (42).

5. Drive belt (3) according to claim 1, 2 or 3, **characterised in that**, either one or both of the width dimension (W) and the depth dimension (D) of the front transition surfaces (42) is larger than the corresponding dimension or dimensions (W, D) of the rear transition surfaces (43).

## Patentansprüche

1. Treibriemen (3) mit einem Endloszugmittel (31) und mit einer Vielzahl relativ dünner Querelemente (32), die am Zugmittel (31) gleitbar montiert und überwiegend quer dazu ausgerichtet sind, die in einem Stanzverfahren mit einem anschließenden Verfahrensschritt zum Entfernen der im Stanzverfahrenen gebildeten Grate hergestellt werden, die eine vordere Hauptfläche (40), die einer Bewegungsrichtung des Elements (32) bei in Betrieb befindlichem Riemen (3) zugewandt ist, sowie eine der Gegenseite zugewandte hintere Hauptfläche (41) haben, die über eine Dicke des Elements (32) voneinander getrennt und überwiegend der Längsrichtung des Treibriemens (3) zugewandt sind, und die zwei Seitenflächen (36) haben, von denen eine jeweils an jeder seitlichen Seite des Elements (32) vorgesehen ist, um einen Reibungskontakt mit einer Scheibe (1, 2) einer Kraftübertragung zu erreichen, in der der Treibriemen (3) zum Einsatz kommen soll, wobei zwischen jeder Seitenfläche (36) und der vorderen Hauptfläche (40) eine jeweilige vordere Übergangsfläche (42) sowie zwischen jeder Seitenfläche (36) und der hinteren Hauptfläche (41) eine jeweilige hintere Übergangsfläche (43) vorgesehen ist, wobei die Übergangsflächen (42, 43) eine in der axialen Richtung des Treibriemens (3) gemessene fiktive Breitenabmessung (W) sowie eine in der Längsrichtung des Treibriemens (3) gemessene fiktive Tiefenabmessung (D) haben, **dadurch gekennzeichnet, dass** sich entweder eine oder beide der Breitenabmessung (W) und der Tiefenabmessung (D) der vorderen Übergangsflächen (42) und die entsprechenda(n) Abmessung oder Abmessungen (W, D) der hinteren Übergangsflächen (43) voneinander unterscheidet bzw. unterscheiden.

2. Treibriemen (3) nach Anspruch 1, **dadurch gekennzeichnet, dass** die vorderen und hinteren Übergangsflächen (42, 43) gekrümmt ausgebildet sind und dass sich ein vorderer Krümmungsradius (Rf), der mindestens in wirksamer Weise die Krümmung der vorderen Übergangsflächen (42) definiert, und ein hinterer Krümmungsradius (Rr), der mindestens in wirksamer Weise die Krümmung der hinteren Übergangsflächen (43) definiert, voneinander unterscheiden.

3. Treibriemen (3) nach dem vorstehend aufgeführten Anspruch, **dadurch gekennzeichnet, dass** ein Verhältnis zwischen dem vorderen Krümmungsradius (Rf) und einem hinteren Krümmungsradius (Rr) mindestens 1,25 beträgt und vorzugsweise größer als 2 ist.

4. Treibriemen (3) nach Anspruch 1, 2 oder 3, **dadurch gekennzeichnet, dass** entweder eine oder beide der Breitenabmessung (W) und der Tiefenabmessung (D) der hinteren Übergangsflächen (43) größer als die entsprechende(n) Abmessung oder Abmessungen (W, D) der vorderen Übergangsflächen (42) ist bzw, sind.

5. Treibriemen (3) nach Anspruch 1, 2 oder 3, **dadurch gekennzeichnet, dass** entweder eine oder beide der Breitenabmessung (W) und der Tiefenabmessung (D) der vorderen Übergangsflächen (42) größer als die entsprechende(n) Abmessung oder Abmessungen (W, D) der hinteren Übergangsflächen (43) ist bzw. sind.

## Revendications

1. Courroie d'entraînement (3) pourvue d'un moyen de traction sans fin (31) et d'une pluralité d'éléments transversaux relativement minces (32) qui sont montés de manière coulissante sur le moyen de traction (31) et orientés principalement transversalement à celui-ci, qui sont formés dans un procédé de découpage à l'emporte-pièce suivi d'une étape de procédé pour enlever les bavures formées au cours du procédé de découpage à l'emporte-pièce, qui ont une face avant principale (40) orientée dans une direction de mouvement de l'élément (32) lorsque la courroie (3) fonctionne,
et une face arrière principale (41) orientée à l'opposé, lesquelles sont mutuellement séparées par une épaisseur de l'élément (32) et sont principalement orientées dans la direction longitudinale de la courroie d'entraînement (3),
et qui ont deux faces latérales (36), une de chaque côté latéral de l'élément (32) de manière à obtenir un contact de friction avec une poulie (1, 2) d'une transmission dans laquelle la courroie d'entraînement (3) doit être appliquée, une surface de transition avant (42) respective étant prévue entre chaque face latérale (36) et ladite face avant principale (40), et une surface de transition arrière (43) respective étant prévue entre chaque face latérale (36) et la face arrière principale (41), lesquelles surfaces de transition (42, 43) ont une dimension en largeur théorique (W) telle que mesurée dans la direction axiale de la courroie d'entraînement (3) et une dimension en profondeur théorique (D) telle que mesurée dans la direction longitudinale de la courroie d'entraînement (3), **caractérisée en ce que** l'une et/ou l'autre de la dimension en largeur (W) et de la dimension en profondeur (D) des surfaces de transition avant (42) et la ou les dimensions correspondantes (W, D) des surfaces de transition arrière (43) sont mutuellement différentes.

2. Courroie d'entraînement (3) selon la revendication 1, **caractérisée en ce que** les surfaces de transition avant et arrière (42, 43) sont incurvées et **en ce qu'**un rayon de courbure avant (Rf), qui définit au moins effectivement la courbure des surfaces de transition avant (42), et un rayon de courbure arrière (Rr), qui définit au moins effectivement la courbure des surfaces de transition arrière (43), sont mutuellement différents.

3. Courroie d'entraînement (3) selon la revendication précédente, **caractérisée en ce qu'**un rapport entre le rayon de courbure avant (Rf) et un rayon de courbure arrière (Rr) vaut au moins 1,25, et est de préférence supérieur à 2.

4. Courroie d'entraînement (3) selon la revendication, 1, 2 ou 3, **caractérisée en ce que** l'une et/ou l'autre de la dimension en largeur (W) et de la dimension en profondeur (D) des surfaces de transition arrière (43) est supérieure à la ou aux dimensions correspondantes (W, D) des surfaces de transition avant (42).

5. Courroie d'entraînement (3) selon la revendication 1, 2 ou 3, **caractérisée en ce que** l'une et/ou l'autre de la dimension en largeur (W) et de la dimension en profondeur (D) des surfaces de transition avant (42) est supérieure à la ou aux dimensions correspondantes (W, D) des surfaces de transition arrière (43).
